# EUROPÄISCHE PATENTANMELDUNG

(11) **EP 1 720 054 A2**
(43) Veröffentlichungstag der Anmeldung: **08.11.2006**
(21) Anmeldenummer: 06008984.4
(22) Anmeldetag: 29.04.2006
(51) Int. Cl.: G02B 21/00

(54) **Verfahren und Vorrichtung zur einstellbaren Veränderung von Licht**

(30) Priorität: 03.05.2005 DE 102005020543
(71) Anmelder: Carl Zeiss Microlmaging GmbH, 07745 Jena (DE)
(72) Erfinder: Wolleschensky, Ralf, 99510 Apolda (DE); Kempe, Michael, 07751 Jena (DE); Klopfleisch, Peter, 07751 Jena (DE)
(74) Vertreter: Hampe, Holger

(57) **Zusammenfassung**

Verfahren und Vorrichtung zur einstellbaren Veränderung von Beleuchtungslicht und/oder Probenlicht bezüglich seiner spektralen Zusammensetzung und/oder Intensität,
wobei mit ersten Polarisationsmitteln (P) eine räumliche Trennung in Strahlungsanteile unterschiedlicher Polarisation erfolgt,
mit ersten Dispersionsmittel (D) eine spektrale räumliche Aufspaltung mindestens eines Strahlungsanteils vorgenommen wird
und der Polarisationszustand mindestens eines Teils des spektral räumlich aufgespaltenen Strahlungsanteils verändert wird (S),
wobei eine Spiegelung (M1) des Beleuchtungslichtes und/oder Detektionslichtes erfolgt.
Eine Vorrichtung ohne Polarisationsmittel mit Dispersionsmitteln und entweder einen Spiegelarray oder einer Spiegelmaske mit fixen Spiegelelementen, die in mindestens zwei Richtungen orientiert sind, ist auch beschrieben.

## Beschreibung

Die Erfindung bezieht sich auf ein Verfahren und Anordnungen in der Mikroskopie, insbesondere der Fluoreszenzmikroskopie, der Laser Scanning Mikroskopie, der Fluoreszenz-Korrelationsspektroskopie und der Scanning Nahfeldmikroskopie, zur Untersuchung von vorwiegend biologischen Proben, Präparaten und zugehörigen Komponenten. Mit eingeschlossen sind auf Fluoreszenzdetektion basierende Verfahren zum Screenen von Wirkstoffen (High Throughput Sceening) sowie Verfahren der Durchflusszytometrie. Simultan-Untersuchungen von Proben mit Mehrfachfluorophoren in Echtzeit durch eine simultane Beleuchtung der Probe in mehreren Probenpunkten werden damit bei überlappenden Fluoreszenzspektren auch in räumlichen Strukturen von dicken Proben möglich.

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.
Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet. Die so angeregten Farbstoffmoleküle können auf verschiedene Weise in den Grundzustand zurückgelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.
Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen, möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitischen Strahlteiler verwendet.

Neben der Anregung der Farbstoffinoleküle mit einem hoch energetischen Photon (Einphotonen-Absorption) ist auch eine Anregung mit mehreren Photonen geringerer Energie möglich. Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungsvon der Emissionsstrahlung erfolgt in der gleichen Art und Weise wie bei der Einphotonen-Absorption.

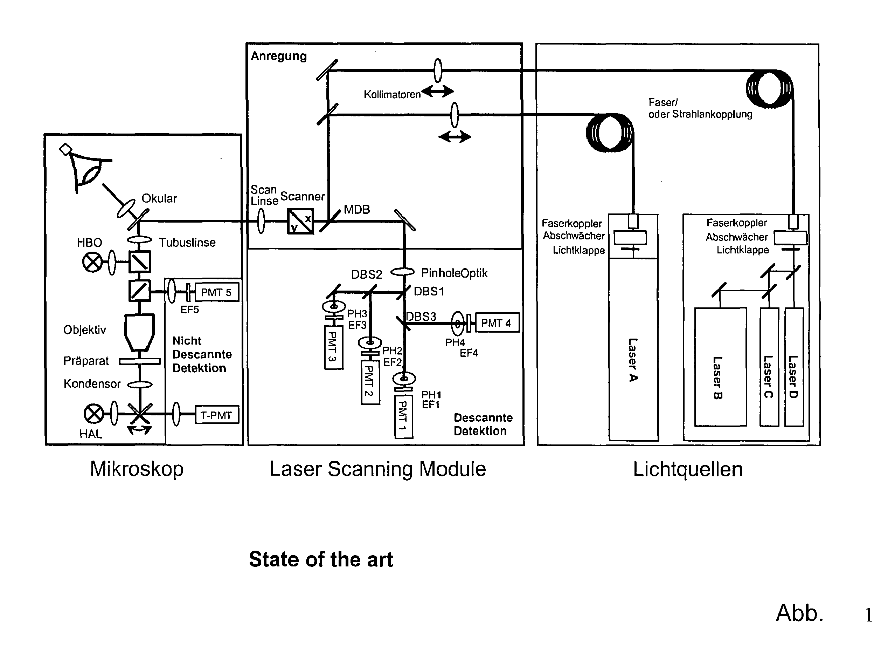

Der Stand der Technik soll im folgenden beispielhaft anhand eines konfokalen Laser-Scanning- Mikroskopes (LSM) erläutert werden (Abb. 1).

Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.
Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (z.B. Gaslaser: Argon, Argon Krypton, Festkörperlaser: TiSa-Laser, Dioden). Weiterhin erfolgt im Lichtquellenmodul die Selektion der Wellenlängen und die Einstellung der Intensität der benötigten Anregungswellenlänge, z.B. durch den Einsatz eines akusto-optischen Kristalls. Anschließend gelangt die Laserstrahlung über eine Faser oder eine geeignete Spiegelanordnung in das Scanmodul.
Die in der Lichtquelle erzeugte Laserstrahlung wird mit Hilfe des Objektivs beugungsbegrenzt über die Scanner, die Scanoptik und die Tubuslinse in das Präparat fokussiert. Die Scanner rastern punktförmig die Probe in x-y-Richtung ab. Die Pixelverweilzeiten beim Scannen über die Probe liegen meist im Bereich von weniger als einer Mikrosekunde bis zu einigen Sekunden.
Bei einer konfokalen Detektion (descanned Detektion) des Fluoreszenzlichtes, gelangt das Licht, das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.
Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descanned Detektion).

In einer weiteren Anordnung zur Detektion einer durch Mehrphotonenabsorption angeregten Farbstofffluoreszenz erfolgt weiterhin eine descanned Detektion, jedoch wird diesmal die Pupille des Objektives in die Detektionseinheit abgebildet (nichtkonfokal descanned Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.
Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden.
Zum getrennten Nachweis erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in verschiedenen Punktdetektoren (PMT 1-4).

Durchflußzytometer dienen der Untersuchung und der Klassifikation von Zellen und anderen Partikeln. Die Zellen befinden sich hierzu in einer Flüssigkeit gelöst und werden durch eine Kapillare gepumpt. Zur Untersuchung der Zellen wird ein Laserstrahl von der Seite in die Kapillare fokussiert. Die Zellen sind mit verschiedenen Farbstoffen oder fluoreszierenden Biomolekülen gefärbt. Gemessen wird das angeregte Fluoreszenzlicht und das rückgestreute Anregungslicht. Die Trennung des Fluoreszenzsignals der Probe von dem Anregungslicht erfolgt mittels dichroitischen Strahlteilern (MDB siehe Abb. 1).
Aus dem rückgestreuten Signal kann die Größe der Zellen bestimmt werden. Mit Hilfe der Spektraleigenschaften der Fluoreszenz einzelner Zellen können verschiedene Zellen separiert/sortiert oder getrennt gezählt werden. Die Sortierung der Zellen erfolgt mit einem elektrostatischen Feld in verschiedene Kapillaren. Das Ergebnis, d.h. z.B. die Anzahl der Zellen mit Farbstoff A im Vergleich zu Zellen mit Farbstoff B wird häufig in Histogrammen dargestellt.
Die Durchflußgeschwindigkeit beträgt typischerweise einige 10-100 cm/s. Deshalb wird eine hochempfindliche Detektion benötigt. Zur Einschränkung des Detektionsvolumens erfolgt nach dem Stand der Technik eine konfokale Detektion.

Statt eines Punktscanners werden nach dem Stand der Technik auch so genannte Linienscanner verwendet (Lit.: Corle, Kino; "Confocal Scanning Optical Microscopy and Related Imaging Systems"; Academic Press 1996). Der prinzipielle Aufbau entspricht im wesentlichen dem eines LSM nach Abb. 1. Jedoch wird statt eines Punktfokus eine Linie in die Probe (3) abgebildet und die zu untersuchende Probe nur noch in einer Richtung (x oder y) gescannt. Durch das Scannen einer Linie anstatt eines Punktes kann die Bildaufnahmerate erheblich vergrößert werden. Somit kann dieses Scanverfahren zur Beobachtung von schnell ablaufenden Prozessen in Echtzeit (Echtzeitmikroskopie) verwendet werden.

In einer weiteren Anordnung zur Echtzeitmikroskopie nach dem Stand der Technik wird das komplette zu untersuchende Feld mittels einer aufgeweiteten Lichtquelle beleuchtet. Jedoch werden nur spezielle Punktmuster des gesamten zu scannenden Feldes durch eine sich schnell drehende Scheibe freigegeben. Diese Verfahren werden in der Literatur meist als Nipkow-Disk Verfahren bezeichnet (Lit.: Corle, Kino; "Confocal Scanning Optical Microscopy and Related Imaging Systems"; Academic Press 1996).

Anordnungen zum Screenen von Farbstoffen wie z.B. in so genannten Chipreadern ähneln in ihrem optischen Aufbau einem Laser Scanning Mikroskop. Sie scannen jedoch ein deutlich größeres Bildfeld zur Untersuchung der makroskopischen Proben, beispielsweise Screenen von Wirkstoffen auf einem Biochip. Die Kantenlänge der Scanfelder betragen hierbei einige 10 mm. Diese Scanfelder können z.B. durch eine Vergrößerung der Scanwinkel der Galvoscanner, durch eine Anordnung der Probe in einem Zwischenbild der Mikroskopanordnung oder durch eine spezielle Objektivanordnung (Makroobjektiv), die das Zwischenbild vergrößert auf die Probe abbildet, erzielt werden.

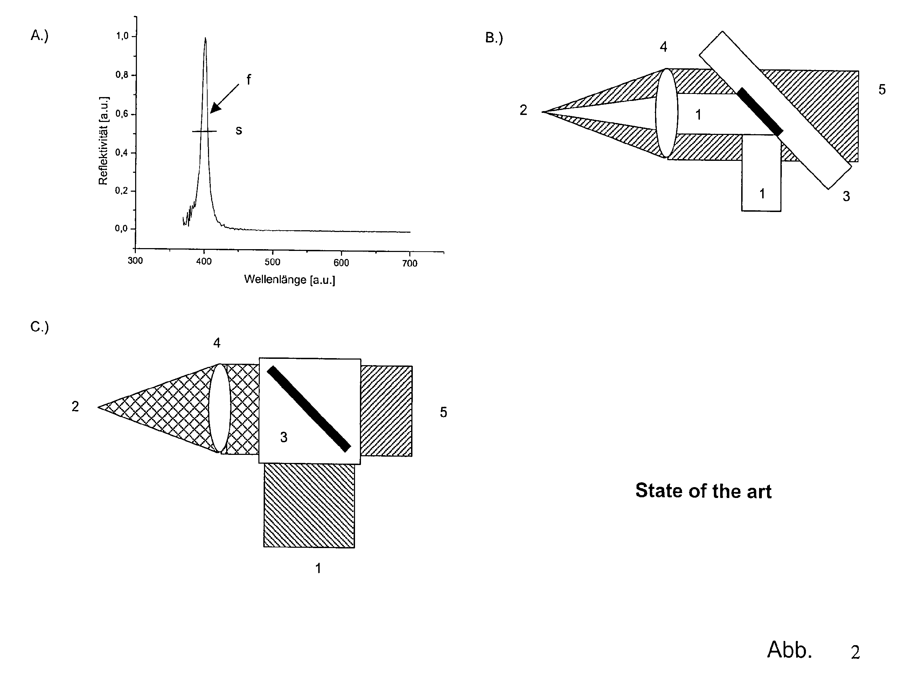

Die Trennung des Anregungslichtes vom von der Probe emittierten Licht erfolgt nach dem Stand der Technik durch spektrale Trennung unter Ausnutzung des Stokesshiftes, durch eine Einschränkung der numerischen Apertur der zur Probenbeleuchtung/-detektion verwendeten Optiken oder durch eine Aufteilung in verschiedene Polarisationsrichtungen.
Zur spektralen Trennung des Anregunglichts vom von der Probe emittierten Licht werden spezielle dichroitische Strahlteiler verwendet. Diese sind meist, wie in Abb. 2a gezeigt, so ausgelegt, dass sie möglichst effizient das Anregungslicht reflektieren und das von der Probe emittierte Licht möglichst effizient transmittieren. Dargestellt ist der Reflexionsgrad (Reflektivität) in Abhängigkeit von der Wellenlänge. Bei Verwendung von polarisiertem Anregungslicht beträgt die minimale spektrale Bandbreite (s) des reflektierten Wellenlängenbereiches ca. 10 nm, wobei die Flankensteilheit (f) meist >5 nm ist. Somit kann nach dem Stand der Technik mit einem dichroitischen Strahlteiler bei Verwendung einer Anregungswellenlänge, das von der Probe emittierte Licht, effizient getrennt werden. Jedoch verschlechtert sich die Effizienz bei simultaner Anregung mehrerer Farbstoffe mit mehreren Wellenlängen (Multifluoreszenzmikroskopie), da es meist zu einer spektralen Überlappung des Anregungslichtes und des emittierten Lichtes kommt. Weiterhin muß bei Verwendung verschiedener Farbstoffe mit verschiedenen Absorptionseigenschaften jedesmal ein spezieller Strahlteiler kreiert werden. In einem Weitfeldmikroskop erfolgt meist eine breitbandige Anregung der Probe mit Licht einer Weißlichtquelle, wobei sich teilweise die Anregungs- und die emittierte Strahlung spektral überlagern. Somit kommt es bei Verwendung von dichroitischen Strahlteilern nach dem Stand der Technik zu einer schlechten Effizienz der Trennung von Anregungslicht und emittierten Licht.

Die Trennung des Anregungslichtes vom emittierten Licht durch Einschränkung der numerischen Apertur der Probenbeleuchtungsoptik (4 in Abb. 2b) kann beispielsweise durch eine Beleuchtung der Probe mit eingeschränkter Apertur erfolgen, so dass nur die achsnahen Strahlen (1) in Richtung zur Probe (2) gelangen. Da die Emission in alle Raumrichtungen erfolgt, kann im verbleibenden Aperturbereich dieses Licht der Probe (2) aufgesammelt werden. Die Trennung des Anregungslichts vom emittierten Licht erfolgt anschließend mit einem teilweise voll verspiegelten (schwarzer Bereich) Planplatte (3). Die Detektion des von der Probe emittierten Lichts erfolgt in Strahlrichtung (5). Nachteilig bei den aus dem Stand der Technik (z.B. EP 1353209) bekannten Verfahren zur Teilung der numerischen Apertur ist, dass durch die Einschränkung der Apertur zum einen die Effizienz der Detektion und zum anderen die optische Auflösung der Anordnung verschlechtert werden. Beide Parameter sind hierbei miteinander verkoppelt. Will man beispielsweise eine hohe Effizienz der Trennung erzielen, so verschlechtert sich die optische Auflösung.

Nachteilig bei allen bisher erläuterten Verfahren nach dem Stand der Technik ist, dass die Trennung des Anregungslichtes vom von der Probe emittierten Licht wellenlängenabhängig, d.h. nicht flexibel einstellbar, oder mit eingeschränkter Effizienz typischerweise 70% bis 90% - abhängig von den geforderten Spekraleigenschaften und der Anzahl der Beleuchtungslinien - erfolgt.

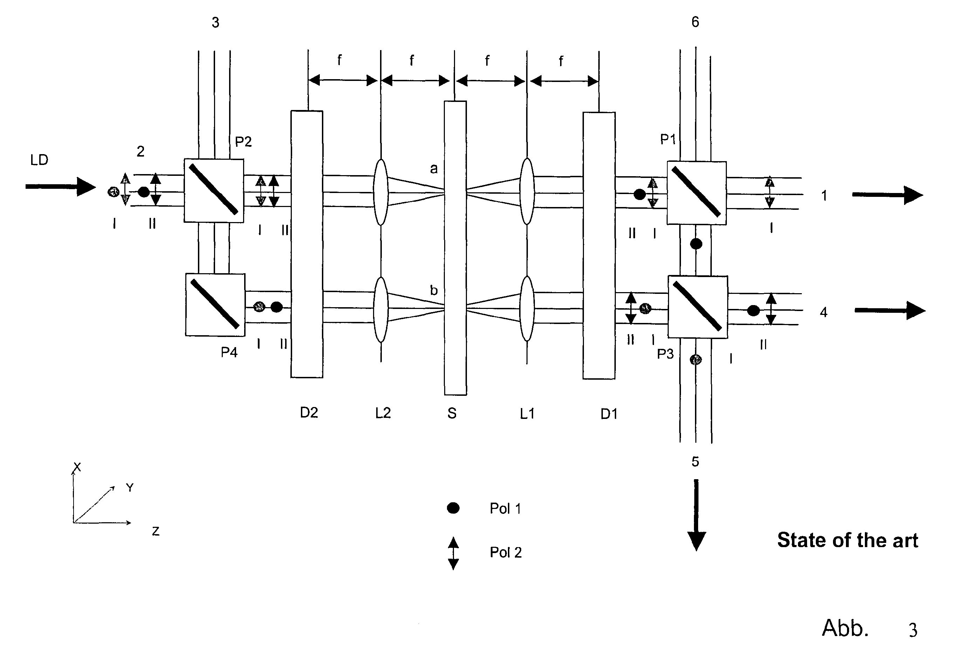

In US 6510001, US 6654165, US 2003/0133189 und DE19936573 wurden optische Vorrichtungen beschrieben, bei der eine spektral flexible ohne Bewegung von mechanischen Komponenten einstellbare Trennung des Detektionslichtes vom Anregungslicht erfolgen kann (Abb. 3). In dieser Anordnung wird der MDB durch einen akusto optischen Modulator AOTF (17,4) ersetzt. Dieser transmittiert das aus Richtung der Probe kommende Beobachtungslicht (5, 12) so dass es in Richtung Detektor (15) gelangt. Das Anregungslicht (3, 9) läuft unter einem Winkel relativ zu (12) und wird durch den AOTF in den gemeinsamen Probenstrahlengang (5) gebeugt. Die Frequenz des AOTF muss hierbei so eingestellt werden, dass der Anregungsstrahlengang und der Detektionsstrahlengang kolinear verlaufen. Wird dies nicht gewährleistet dann kommt es zu einer Reduzierung der Detektionseffizienz insbesondere bei einer konfokalen Detektion bzw. zu Bildartefakten, da die Anregungsspots bei Verwendung verschiedener Wellenlängen nicht übereinander liegen. Spezielle Kompensationsvorrichtungen sind in DE 10137155 beschrieben. Nachteilig bei diesen Anordnungen ist, dass einen Vielzahl von aufeinander abgestimmten optischen Komponenten nötig sind, die die Gesamttransmission verschlechtern

In DE10257237 ist ein Verfahren und optische Vorrichtungen beschrieben mit der eine achromatische Trennung des Detektionslichtes vom Anregungslicht in einem Weitfeld- bzw. in einem linienscannenden Mikroskop erfolgen kann. Hierbei wird die in einer Probe angeregte und/ oder rückgestreute und/ oder von der Probe reflektierte Lichtstrahlung separiert, indem die Probenbeleuchtung in eine und/oder in die Nähe einer Pupillenebene des Strahlenganges zwischen Probenebene und Erfassungssebene fokussiert wird und in dieser Ebene Mittel zur räumlichen Trennung des Beleuchtungslichtes vom Detektionslicht vorgesehen sind.

DE10241472 (Abb. 3) beschreibt ein Verfahren und Anordnung zur einstellbaren Veränderung von Beleuchtungslicht und/ oder Probenlicht bezüglich seiner spektralen Zusammensetzung und/ oder Intensität, wobei mit ersten Polarisationsmitteln (P1, P3) eine räumliche Trennung in Strahlungsanteile unterschiedlicher Polarisation erfolgt, mit ersten Dispersionsmittel (D1) eine spektrale räumliche Aufspaltung mindestens eines Strahlungsanteils vorgenommen wird, die spektral räumlich aufgespalteten Anteile auf ein Element S abgebildet werden (L1), der Polarisationszustand mindestens eines Teils des spektral räumlich aufgespaltenen Strahlungsanteils durch die Wirkung des Elementes S verändert wird und über zweite Abbildungsmittel (L2) und Polarisationsmittel (P2, P4) eine räumlichen Trennung und/oder Zusammenführung von Strahlungsanteilen unterschiedlicher Polarisation vorgenommen wird, wobei vorteilhaft eine räumliche Zusammenführung von bezüglich ihres Polarisationszustandes veränderten und nicht veränderten Strahlungsanteilen durch zweite Dispersionsmittel (D2) erfolgt. Nachteilig bei dieser Anordnung sind die Anzahl der optischen Komponenten zur spektralen räumlichen Aufspaltung durch die die Effizienz der Anordnung reduziert werden. Weiterhin erfolgt die Manipulation des Polarisationszustandes der Spektralanteile am Element S mit einem linearen Array. Dieses Array erfordert je nach vorgegebener spektrale Auflösung einen hohen Aufwand bzgl. der elektronischen Beschaltung. Zusätzlich ist die Geschwindigkeit bei Verwendung eines Spatial Light Modulators eingeschränkt und beträgt einige 10 ms. Im Stand der Technik DE10241472 (Abb. 3) sind zwischen je 2 Strahlteilerwürfeln (P2 und P1 bzw. P4 und P3) 2 dispersive Elemente (z.B. Prismen oder Gitter) D1 und D2 angeordnet, die die Lichtstrahlung räumlich spektral entlang der Y-Koordinate aufspalten bzw. wieder zusammenführen. Die Optiken L1 und L2 befinden sich im Abstand von jeweils ihrer Brennweite f, die auch für die Optiken unterschiedlich sein kann, zwischen den dispersiven Elementen D1 bzw. D2 und einem Element zur Drehung der Polarisation, beispielsweise einem Spatial Light Modulator (SLM) S. Die Optiken L1 und L2 gemeinsam mit den dispersiven Elementen D1 und D2 dienen der Erzeugung einer spektralen Fourierebene am Ort des SLM S. In dieser Ebene sind die spektralen Anteile des aus Richtung 2 oder Richtung 1 kommenden Lichtes räumlich entlang der y-Koordinate separiert. Das SLM (z.B. SLM640 der Firma Jenoptik, Germany) besteht aus einer Reihe von Streifen (beim SLM 640 sind es 640 Streifen), die einzeln angesteuert werden können. Je nach Ansteuerung des jeweiligen Pixels kann die Polarisationsrichtung des hindurchtretenden Lichtes variiert werden. SLM werden nach dem Stand der Technik in so genannten Pulse Shapern eingesetzt (Lit.:Stobrawa et al., Apl. Phy.B72, 627-630 (2002)). Hierbei erfolgt durch die Wirkung des SLM in Kombination mit dispersiven Elementen eine Phasenverzögerung und / oder eine Amplitudenänderung der Spektralanteile der Lichtquelle. Die Lichtquelle muss hierzu im Gegensatz zu den nachfolgend beschriebenen Anordnungen linear polarisiert sein, da sonst ein Energieverlust auftritt. In DE 19842288 wird eine Anordnung beschrieben, die das spektral aufgespaltene Beleuchtungslicht über einen Spiegelträger (ST) selektiv reflektiert und im dispersiven Element wieder zusammenführt. Das Probenlicht wird ebenfalls durch das dispersive Element räumlich spektral aufgespalten und dann durch spezielle keilförmige Glasprismen (GK) in die entsprechenden separaten Detektionskanäle abgelenkt. Durch horizontale Keilverschiebung wird die Kanallage und durch vertikale Keilverschiebung die Bandbreite verändert. Diese Variante hat Vorteile gegenüber dem weiter oben beschriebenen Anordnungen. Das Spiegelsystem (ST, GK) und seine Ansteuerung ist allerdings komplex und weist nur eine begrenzte Flexibilität aus. Insbesondere erfolgt die Kanalaufspaltung des Probenlichtes durch eine durch die Zahl und Form der Glaskeile vorbestimmte Art und Weise.

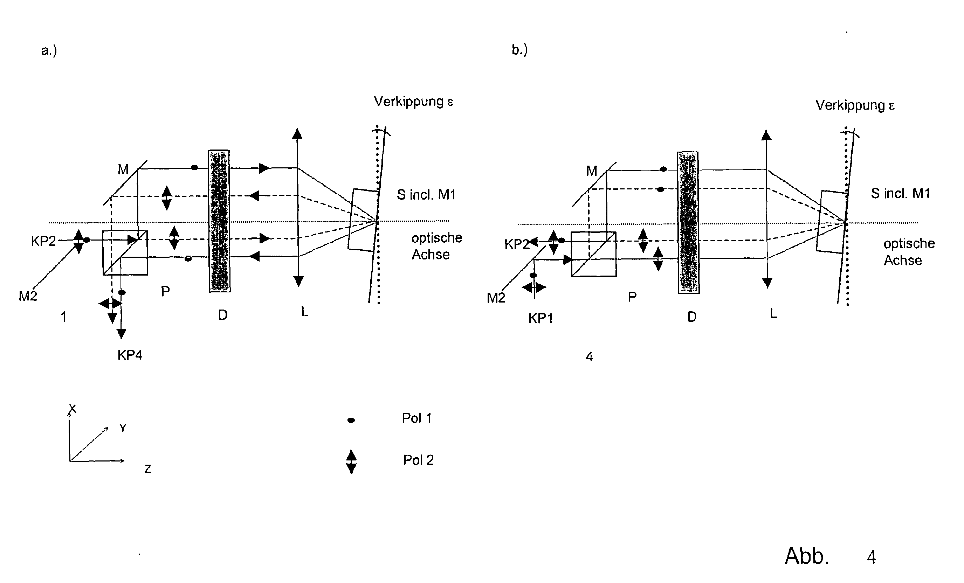

Fig. 4 zeigt die erfindungsgemäße Anordnung in Reflektion.
In Fig. 4a gelangt über Koppelport KP 2 im wesentlichen unpolarisiertes Licht von der Probe auf einen Polteiler P, wird von diesem in zueinander senkrechte Polarisationsanteile (Pfeile bzw. Punkte) aufgespaltet" wobei ein Anteil direkt auf ein dispersives Element D gelangt und der andere Anteil am Teiler P gespiegelt und über einen Spiegel M auf das Element D gelangt und dort spektral aufgespaltet wird.
Die Strahlung wird durch eine Linse L in die Ebene S/M1 von SLM S und Spiegel M1 fokussiert und kann damit wellenlängenabhängig unterschiedlich in Ihrer Polarisation beeinflusst werden, wodurch die Polarisation einzelner spektraler Komponenten des Lichtes, das wieder in Richtung des Polteilers P gelangt, verändert werden kann.

In der Ebene von S können einzelne oder mehrere Spektralanteile in ihrer Polarisation so beeinflusst werden, dass die Polarisationsebene genau um 90 Grad oder um einen von 90 Grad abweichenden Wert gedreht wird. Zusätzlich ist es möglich den S so zu schalten, dass die Polarisationsebene von spektralen Komponenten unbeeinflusst bleibt. Auf einem um einen Winkel s verkippten Spiegel M1 ist zu diesem Zweck SLM (Spatial Light Modulator) angebracht (die Rückseite des SLM ist verspiegelt), der die am Spiegel M1 reflektierten spektral aufgespalteten Strahlanteile beeinflusst.
Im dargestellten Fall, erfolgt für das Probenlicht in einer möglichen Ausführung keine Beeinflussung, es gelangt unbeeinflusst in Richtung der Detektion, wo weitere Mittel zur spektrale separierten Detektion vorgesehen sein können (DE10033180 A) Die reflektierten Anteile gelangen wieder über das dispersive Element, werden dort zusammengefasst und gelangen über Spiegel M bzw. die Rückseite des Polteilers P zum Koppelport KP4 (an unterschiedlichen Stellen). Ansonsten wird auf DE10241472 A1 verwiesen.

Fig. 4b beschreibt die Beeinflussung des Beleuchtungslichtes , das über Koppelport KP1 und einen Spiegel M2 in den Polteiler P gelangt, in die beiden Polarisationsanteile aufgespaltet wird und über das dispersive Element D , Linse L und den SLM / Spiegel M1 in Richtung des Koppelports 2 gelangt.
Unterschiedliche Polarisationsrichtungen gelangen auf unterschiedliche Stellen des dispersiven Elementes und des SLM und können so unterschiedlich durch den SLM beeinflusst werden, bevor sie in KP2 durch den Teiler P wieder vereinigt werden.

Hierbei erfolgt bei dem Beleuchtungslicht durch den SLM einstellbar eine Drehung der Polarisationsebene der Anteile in die jeweils senkrechte Richtung, wodurch diese nach dem Polteiler P wieder vereinigt werden (in Richtung der Probe).

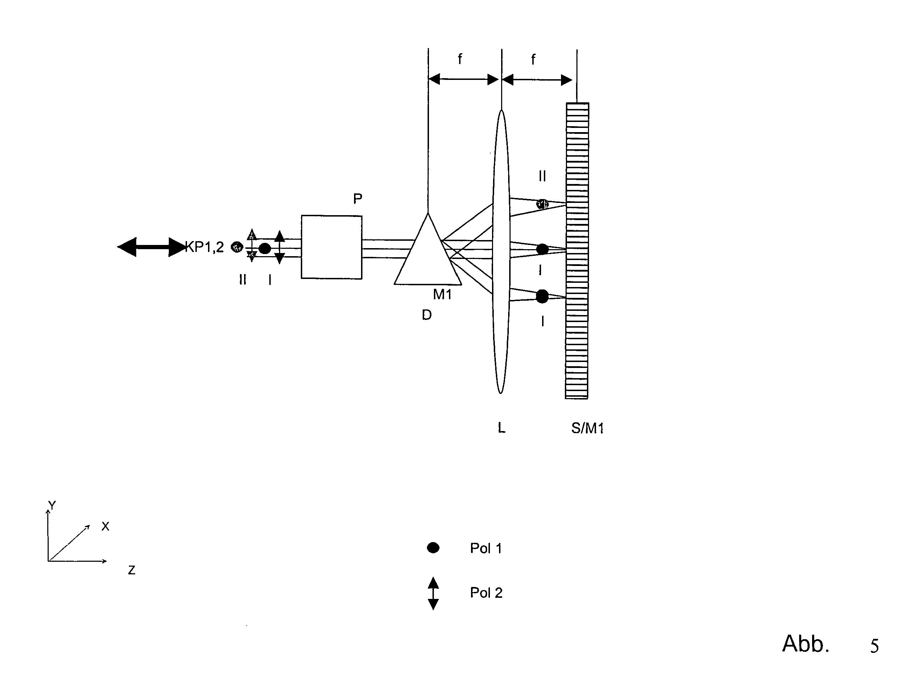

In Fig. 5 ist die erfindungsgemäße Anordnung im Detail von der Seite dargestellt, wobei Licht unterschiedlicher Wellenlängen I und II mit unterschiedlichen Polarisationsrichtungen dargestellt ist. Durch die Separierung am Element D kann das Anregungslicht bzw. Detektionslicht am SLM unterschiedlich durch Drehung der Polarisation beeinflusst werden und auf unterschiedliche Ausgänge gelenkt werden bzw. ganz oder teilweise ausgeblendet werden.

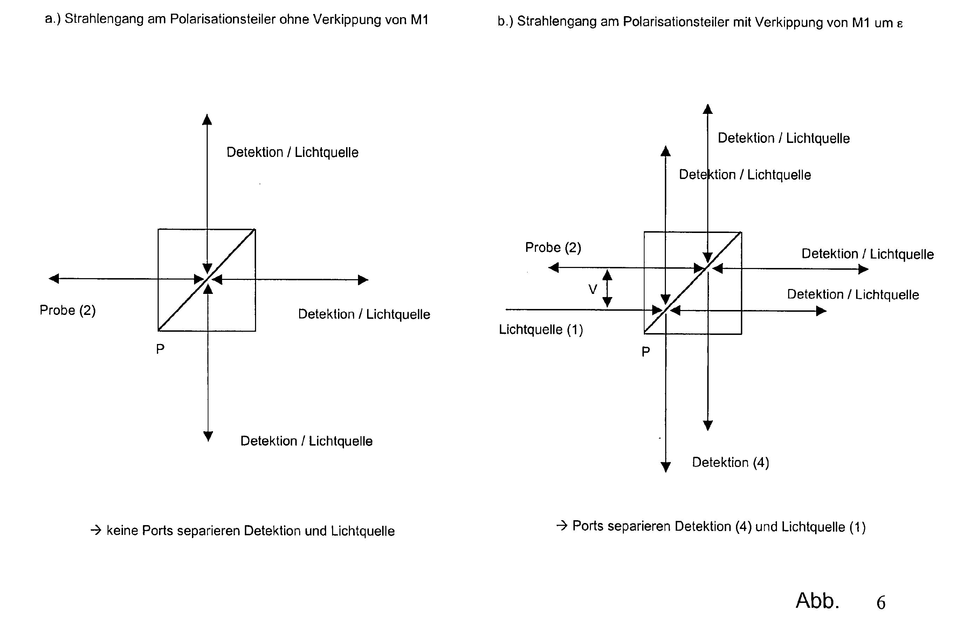

Abb. 6 zeigt den Unterschied der Strahlengänge mit oder ohne Verkippung des Spiegels M1. Deutlich wird, dass durch die Verkippung des Spiegels M1 (siehe Abb. 6b) am Polteiler P ein Versatz V der Lichtwege von Lichtquelle (1) und Probenlicht (2) vorliegt. Weiterhin ist die Detektion (4) separiert. Die drei Ports (KP1, 2 und 4) sind nötig, damit in einem Fluoreszenzmikroskop Anregungslicht aus Richtung (1) kommend in Richtung Probe (2) geleitet, das Probenlicht aus (2) kommend in Richtung Detektor (4) separiert werden können. Ohne Verkippung von M1 ist dies nicht möglich, da die Ports (2) und (1) einen gemeinsamen Strahlengang bilden. Somit ist eine Einkopplung des Anregungslichtes in die Probe nicht möglich (siehe Abb. 6a).

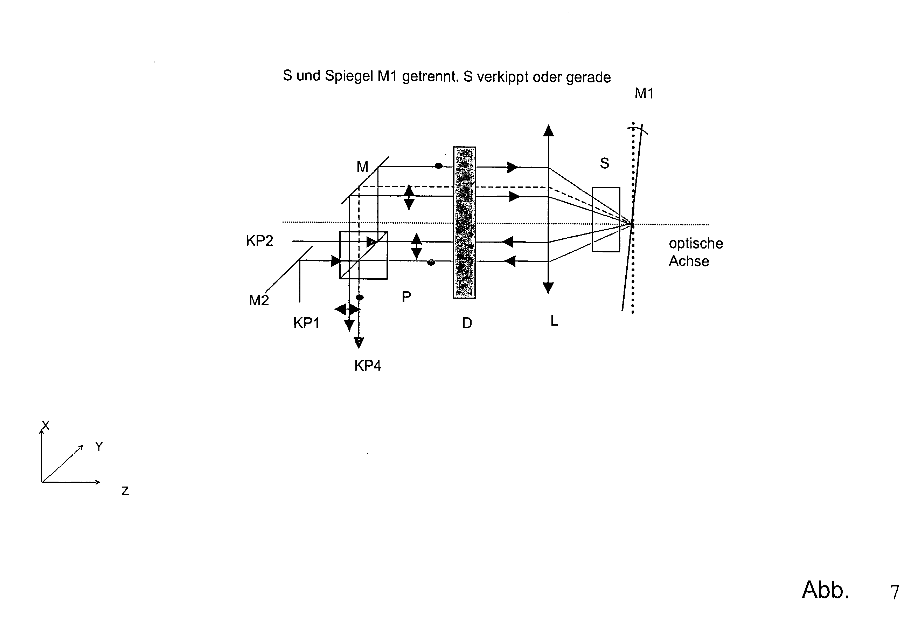

Abb. 7 zeigt eine Anordnung wobei der SLM S in einem Abstand vor dem Spiegel M1 separat angeordnet ist.

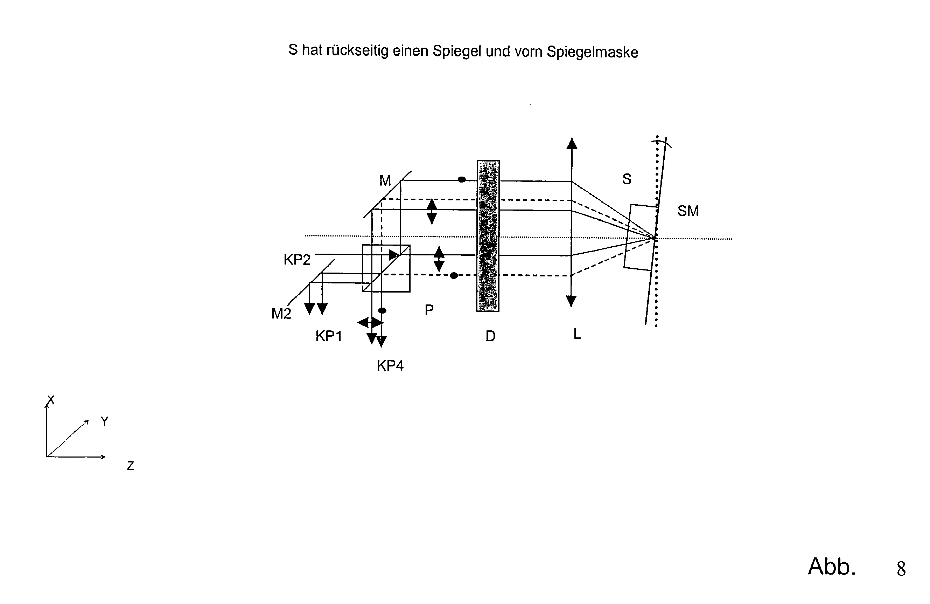

Abb. 8 zeigt eine Spiegelmaske SM nach dem SLM, die in Abb. 9a im Detail dargestellt ist. Sie weist verspiegelte und nicht verspiegelte Abschnitte auf (dunkle Abschnitte AA nicht verspiegelt).
In Fig. 9b ist ein Teilschnitt durch eine derartige Spiegelmaske, die an nicht verspiegelten Bereichen vorteilhaft drei Schichten aufweist, wobei die Schicht c reflektierend ist, b eine Schicht zur Polarisationsdrehung ist (lambda Viertel Platte) und a in den dunklen Abschnitten AA transmittiv ist.

An den transmittiven Stellen von SM erfährt die Strahlung also eine Polarisationsdrehung.

Wird SM entlang X (vertikal) verschoben, gelangen räumlich unterschiedliche transparente Bereiche in den spektral aufgespalteten Lichtweg, wodurch andere Wellenlängenanteile beeinflusst werden. SM wirkt also als einstellbarer Reflektor, indem in bestimmten Bereichen also für bestimmte Spektralkomponenten die Polarisation gedreht wird.
Vorteilhaft wird durch SM das Beleuchtungslicht einstellbar in seiner spektralen Zusammensetzung beeinflusst.

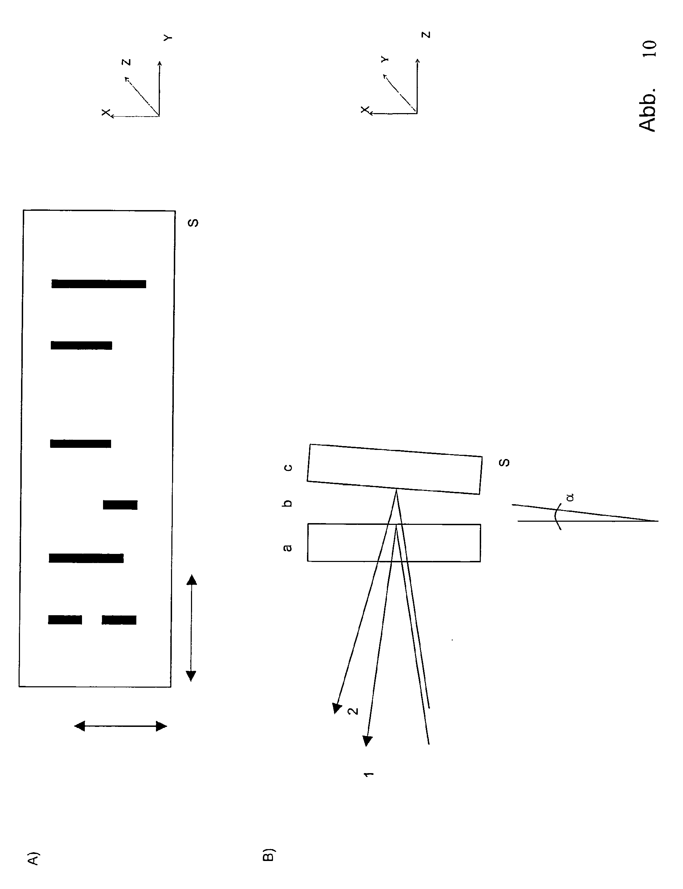

Eine andere Ausführungsform des Elements SM ist in Abb. 10 dargestellt. Hierbei sind die Schicht a mit der Spiegelmaske und die reflektierende Schicht c gegeneinander um einen kleinen Winkel α geneigt. Dadurch erfahren Lichtstrahlen, die durch die Maske hindurchtreten und von der Schicht c reflektiert werden gegenüber an Schicht a reflektierten Strahlen einen Winkelversatz von 2α. Schicht b weist keine polarisationsoptischen Eigenschaften auf und kann daher Luft oder ein Medium sein, was vorteilhaft an das Substrat der Spiegelmaske a brechzahlangepasst ist (um Verluste durch ungewollte Grenzflächenreflexionen zu vermeiden).

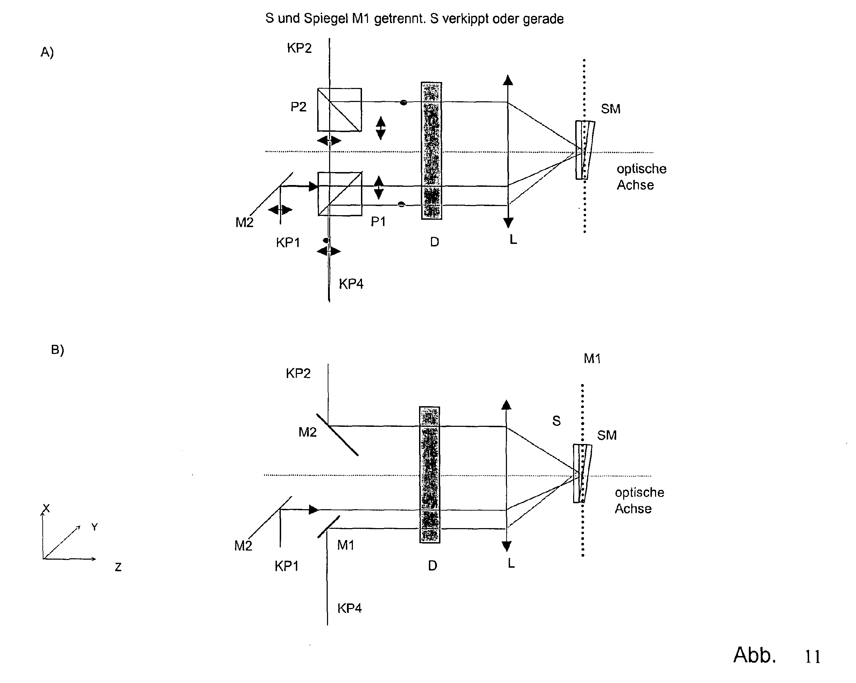

Abbildung 11 zeigt zwei Anordnungen unter Verwendung des Elements SM aus Abb. 10. Hierbei sind alle Elemente mit analogen Funktionen oder Beschreibungen wie in vorhergehenden Abbildungen in gleicher Weise bezeichnet. Abb. 11A zeigt dabei eine Variante mit polarisationsoptischen Elementen, wobei nun 2 Polarisationsstrahlteiler P1 und P2 zur Anwendung kommen. Vorteilhaft ist in dieser Anordnung, dass eine Polarisationsrichtung des von der Probe emittierten Lichtes (KP2) direkt durch P2 und P1 zum Detektionsport KP4 gelangt, wodurch für dieses Licht Verluste minimiert werden. Die Trennung von Anregung und Detektion für die andere Polarisationsrichtung (parallel zum Anregungslicht polarisiert) erfolgt über die spektral abhängige Verkippung des Lichtstrahl an SM. Durch Mehrfachstreuung an der Probe in seiner Polarisationsrichtung gedrehtes Anregungslicht gelangt ebenfalls über P2 und P 1 in KP4. Dieser, i.a. sehr geringe Anteil des Anregungslichtes muss durch Filter vor der Detektion geblockt werden, wenn Fluoreszenzbildgebung erfolgt. Andererseits ermöglicht dieses Licht eine Bildgebung im Auflicht (Streulicht), wenn eine entsprechende Blockung unterbleibt. Die geometrische Trennung von Anregung und Detektion erlaubt auch eine nicht auf polarisationsoptischen Komponenten beruhende Ausführung wie in Abb. 11B gezeigt. Hierbei werden P1 und P2 durch Spiegel M1 und M2 ersetzt. Damit ist die Trennung von der Polarisation des Lichtes (und damit auch der ggf. vorhandenen Drehung der Polarisation des Anregungslichtes durch Streuung) unabhängig. Darüber hinaus vereinfacht diese den Aufbau durch Verwendung einfacherer Komponenten.

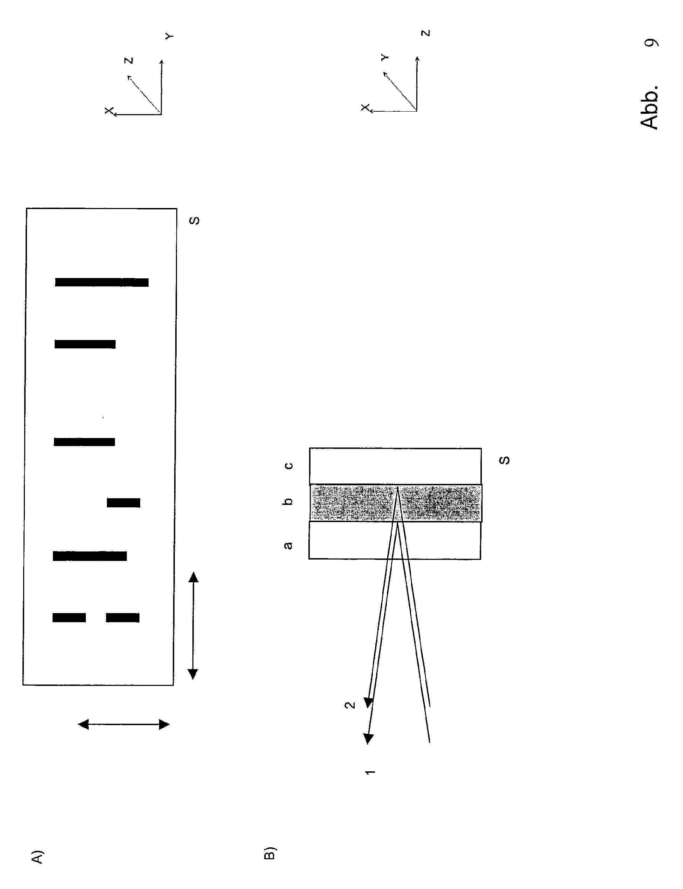

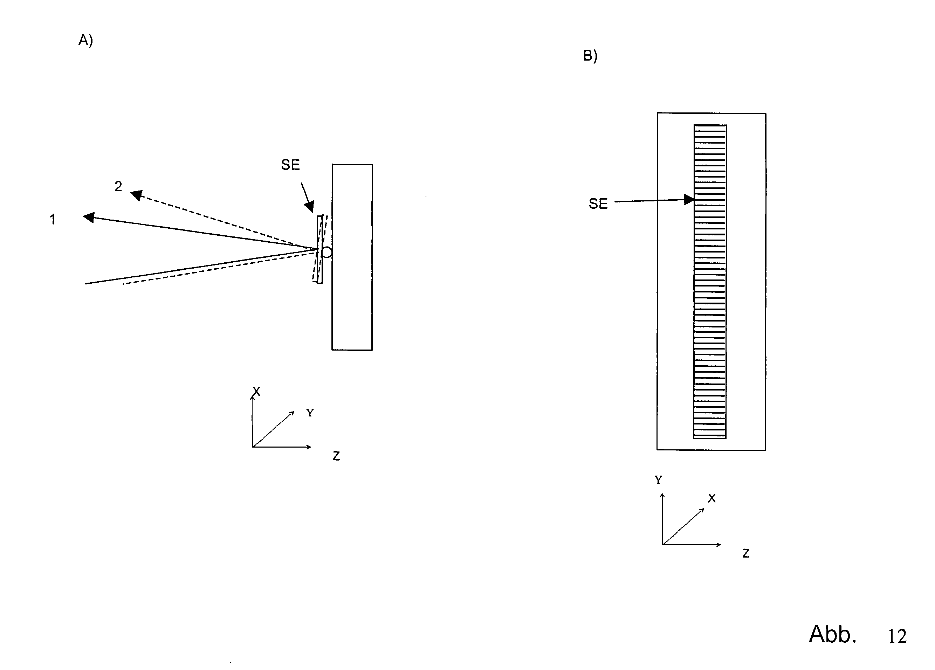

Anstelle des Elements SM wie in Abb. 9 und 10 gezeigt kann in den Anordnungen in Abb. 11 auch ein Spiegelarray zur Anwendung kommen, wie schematisch in Abb. 12 gezeigt wird. Jedes kleine Spiegelelement SE ist dabei in mindestens 2 diskreten Stellungen einzeln kippbar, so dass ein Strahl entweder wie 1 oder 2 abgelenkt wird je nachdem, auf welche Position entlang der y-Achse er auf SM fällt. Die Spiegelgröße sollte dabei an die Auflösung des dispersiven Elements und die nachfolgende Optik angepasst sein, um volle Flexibilität zu ermöglichen.

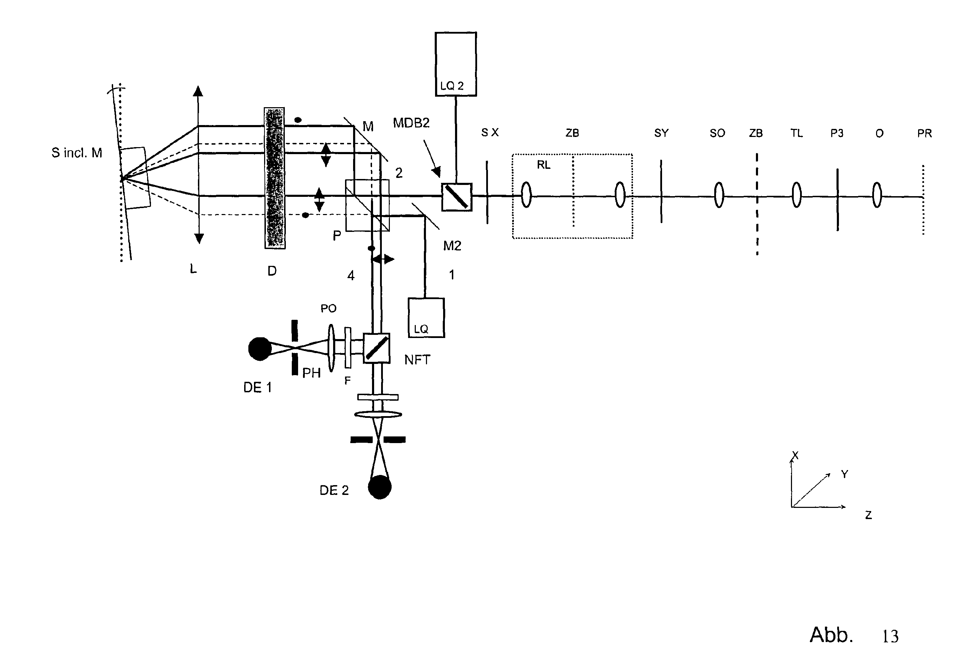

Abb. 13 ist eine Gesamtanordnung mit Detektoranordnungen De1 und DE2 sowie Lichtquellen LQ und (unbeeinflusster) Lichtquelle LQ2
sowie Abbildungsoptiken in Richtung der Probe PR nach dem Stand der Technik.

## Patentansprüche

1. Verfahren zur einstellbaren Veränderung von Beleuchtungslicht und/oder Probenlicht bezüglich seiner spektralen Zusammensetzung und/ oder Intensität,
wobei mit ersten Polarisationsmitteln (Pol 1) eine räumliche Trennung in Strahlungsanteile unterschiedlicher Polarisation erfolgt,
mit ersten Dispersionsmittel (Disp1) eine spektrale räumliche Aufspaltung mindestens eines Strahlungsanteils vorgenommen wird
und der Polarisationszustand mindestens eines Teils des spektral räumlich aufgespaltenenen Strahlungsanteils verändert wird,
wobei eine Spiegelung des Beleuchtungslichtes und/oder Detektionslichtes erfolgt.

2. Vorrichtung zur Veränderung von Beleuchtungslicht bezüglich seiner spektralen Zusammensetzung und/oder Intensität,
bestehend aus ersten Polarisationsmitteln (Pol 1)zur räumlichen Trennung in Strahlungsanteile unterschiedlicher Polarisation, denen erste Dispersionsmittel (Disp1) zur spektralen räumlichen Aufspaltung mindestens eines Strahlungsanteils vor- oder nachgeordnet sind
sowie Mitteln zur Veränderung des Polarisationszustandes mindestens eines Teils des spektral räumlich aufgespaltenenen Strahlungsanteils
denen Reflektionsmittel zur Änderung der Lichtrichtung des Beleuchtungs- und / oder Probenlichtes nachgeordnet sind.

3. Anordnung zur Separierung von Beleuchtungslicht und Probenlicht
bestehend aus ersten Polarisationsmitteln (Pol 1) zur räumlichen Trennung in Strahlungsanteile unterschiedlicher Polarisation, denen erste Dispersionsmittel (Disp1) zur spektralen räumlichen Aufspaltung mindestens eines Strahlungsanteils vor- oder nachgeordnet sind
sowie Mitteln zur Veränderung des Polarisationszustandes mindestens eines Teils des spektral räumlich aufgespaltenen Strahlungsanteils
denen Reflektionsmittel zur Änderung der Lichtrichtung des Beleuchtungs- und/oder Probenlichtes nachgeordnet sind.

4. Vorrichtung zur Veränderung von Beleuchtungslicht und/oder Probenlicht bezüglich seiner spektralen Zusammensetzung und/oder Intensität,
bestehend aus mindestens einem ersten optischen Element zur spektralen räumlichen Aufspaltung mindestens eines Strahlungsanteils,
Mitteln zur räumlich variablen Reflexion des spektral aufgespaltenen Lichtes in eine von mindestens zwei verschiedene Raumwinkel
und einem zweiten optischen Element zur Zusammenführung des spektral aufgespaltenen Lichtes je einer Reflektionsrichtung.

5. Anordnung nach Anspruch 4, wobei das genannte erste und zweite optische Element identisch sind.

6. Anordnung nach Anspruch 4 wobei das genannte Mittel zur räumlich variablen Reflexion eine Spiegelmaske mit fixen Spiegelelementen, die in eine von mindestens zwei Richtungen orientiert sind, ist.

7. Anordnung nach Anspruch 4 wobei das genannte Mittel zur räumlich variablen Reflexion ein Spiegelarray ist, wobei jedes Spiegelelement in mindestens zwei Positionen im Raum orientiert werden kann.

8. Anordnung nach einem der vorangehenden Ansprüche, wobei
eine Verkippung der Reflektionsmittel erfolgt.

9. Anordnung nach einem der vorangehenden Ansprüche,
wobei eine Aufspaltung des Beleuchtungs und/oder Probenlichtes in senkrecht zueinander polarisierte Anteile erfolgt.

10. Anordnung nach einem der vorangehenden Ansprüche,
wobei das Probenlicht zumindest teilweise mit mindestens einem Detektor detektiert wird.

11. Anordnung nach einem der vorangehenden Ansprüche,
wobei als Beleuchtungsquelle mindestens ein Laser vorgesehen ist.

12. Anordnung nach einem der vorangehenden Ansprüche,
wobei als Lichtquelle eine Weißlichquelle vorgesehen ist

13. Anordnung nach einem der vorangehenden Ansprüche,
wobei eine Beleuchtung mit mehreren Wellenlängen erfolgt

14. Anordnung nach einem der vorangehenden Ansprüche,
wobei von der Probe kommendes Fluoreszenzlicht und/oder Lumineszenzlicht und/oder Phosphoreszenzlicht und/oder Streulicht detektiert wird.

15. Anordnung nach einem der vorangehenden Ansprüche,
wobei das Beleuchtungslicht während der Bildaufnahme in seiner Intensität und/oder spektralen Zusammensetzung verändert wird, so daß unterschiedliche Probenorte unterschiedlich beleuchtet werden

16. Anordnung nach einem der vorangehenden Ansprüche,
wobei eine der dispersiven Einheit zugeordnete Abbildungsoptik vorgesehen ist, die die Spektralanteile in eine Brennebene abbildet und in der Brennebene
die Mittel zur Veränderung des Polarisationszustandes mindestens eines Teils des spektral **räumlich aufgespaltenenen Strahlungsanteils angeordnet sind.**

17. Anordnung nach einem der vorangehenden Ansprüche,
wobei die Veränderung des Polarisationszustandes durch einen SLM (Spatial Light Modulator) erfolgt, der ansteuerbare Flüssigkristallzellen aufweist.

18. Meßverfahren zur spektral aufgelösten Erfassung des Polarisationszustandees des Detektionslichtes nach einem der vorangehenden Ansprüche , parallel oder sequentiell.

19. Verfahren zum Ausgleich von durch die Lichtquelle und/ oder optische Elemente hervorgerufene Intensitätsschwankungen im Anregungslicht nach einem der vorangehenden Ansprüche

20. Weitfeldmikroskop mit einer Anordnung nach einem der vorangehenden Ansprüche

21. Fluoreszenzmikroskop mit einer Anordnung nach einem der vorangehenden Ansprüche

22. Punktscannendes Laser-Scanning - Mikroskop mit einer Anordnung nach einem der vorangehenden Ansprüche

23. Linienscannendes Laser - Scanning - Mikroskop mit einer Anordnung nach einem der vorangehenden Ansprüche

24. Scanning- Mikroskop nach einem der Ansprüche 23-25,
wobei eine descannte , teildescannte oder nicht descannte Detektion erfolgt

25. Durchflußzytometer mit einer Anordnung nach einem der vorangehenden Ansprüche

26. Parallel konfokales Mikroskop mit einem Lochraster im Beleuchtungs und/ oder Detektionsstrahlengang mit einer Anordnung nach einem der vorangehenden Ansprüche

27. Anordnung zur Abbildung einer periodischen Struktur auf ein Objekt, Phasenverschiebung der Struktur und Aufzeichnung phasenverschobener Bilder,
mit einer Anordnung nach einem der vorangehenden Ansprüche
